# EUROPÄISCHE PATENTSCHRIFT

(11) **EP 2 389 047 B1**
(45) Veröffentlichungstag und Bekanntmachung des Hinweises auf die Patenterteilung: **28.11.2012**
(21) Anmeldenummer: 10005077.2
(22) Anmeldetag: 14.05.2010
(51) Int. Cl.: H05B 41/28

(54) **Schaltungsanordnung und Verfahren für den effizienten Betrieb einer kapazitiven Last**
Switching device and method for the efficient operation of a capacitive load
Agencement de commutation et procédé pour le fonctionnement efficace d'une charge capacitive

(43) Veröffentlichungstag der Anmeldung: 23.11.2011
(73) Patentinhaber: Karlsruher Institut für Technologie, 76131 Karlsruhe (DE)
(72) Erfinder: Meißer, Michael, 76149 Karlsruhe (DE)
(74) Vertreter: Gagel, Roland

(56) Entgegenhaltungen:
- WO-A2-2009/022804
- US-A1- 2008 303 448

## Beschreibung

### Technisches Anwendungsgebiet

Die vorliegende Erfindung betrifft eine Schaltungsanordnung sowie ein Verfahren für den gepulsten Betrieb einer kapazitiven Last, insbesondere einer dielektrisch behinderten Entladungslampe (DBE).

Der gepulste Betrieb von DBE ist insbesondere für einen hohen Wirkungsgrad der DBE-Lampe sowie einen hohen Grad an optischer Homogenität vorteilhaft. Auch beim Betrieb anderer kapazitiver Lasten, wie bspw. von Lasern, Eingangskapazitäten von Leistungsschaltern und Piezoaktuatoren können Pulse anstelle von kontinuierlichem Betrieb eingesetzt werden.

Kapazitive Lasten sind durch einen geringen Leistungsfaktor gekennzeichnet, so dass es einem Vielfachen an Scheinleistung bedarf, um eine bestimmte Wirkleistung in der Last umzusetzen. Werden kapazitive Lasten von idealen Spannungsquellen dynamisch getrieben, so fließen theoretisch unendlich hohe Ströme. Unter Verwendung realer Bauteile sind die Ströme immer noch sehr groß und werden - verlustbehaftet - lediglich durch die Innenwiderstände der Spannungsquelle, der Zuleitungen und des Verbrauchers bestimmt. Der Wirkungsgrad des Betriebs einer kapazitiven Last mit einer Spannungsquelle ist daher sehr gering. Der Vorteil liegt in der Möglichkeit, steilste Spannungsanstiege zu generieren.

Um höhere Wirkungsgrade zu erreichen, können kapazitive Lasten mit Stromquellen getrieben werden. Stromquellen zeichnen sich dadurch aus, dass der Strom begrenzt ist und in der Regel stetig sein muss. Die Spannungsanstiege am kapazitiven Verbraucher sind dadurch zwar begrenzt, jedoch sind weitaus höhere Wirkungsgrade möglich. Eine Stromquelle lässt sich bspw. mit Hilfe einer Induktivität bzw. Drossel realisieren.

### Stand der Technik

Eine Schaltungsanordnung sowie ein Verfahren für den Betrieb einer dielektrisch behinderten Entladungslampe sind bspw. aus der DE 10 2004 021 243 B3 bekannt. Diese Schaltungsanordnung weist eine Drossel zur Zwischenspeicherung der Energie bzw. als Stromquelle für den Betrieb der dielektrisch behinderten Entladungslampe auf. Eine Energierückspeisung ist dabei nicht vorgesehen.

Die Aufgabe der vorliegenden Erfindung besteht darin, eine Schaltungsanordnung sowie ein Verfahren für den Betrieb einer kapazitiven Last anzugeben, die einen noch effizienteren Pulsbetrieb der kapazitiven Last ermöglichen und mit einer geringen Anzahl an Bauteilen realisiert werden können.

### Darstellung der Erfindung

Die Aufgabe wird mit der Schaltungsanordnung sowie dem Verfahren gemäß den Patentansprüchen 1, 2 und 11 gelöst. Vorteilhafte Ausgestaltungen der Schaltungsanordnung sowie des Verfahrens sind Gegenstand der abhängigen Patentansprüche oder lassen sich der nachfolgenden Beschreibung sowie den Ausführungsbeispielen entnehmen.

Die vorgeschlagene Schaltungsanordnung weist einen Primärkreis und einen Sekundärkreis auf. Der Sekundärkreis ist zumindest durch einen Anschluss für einen positiven und einen negativen Pol einer Spannungsquelle, eine Induktivität bzw. Drossel und einem ersten Schalter mit einer Antiparalleldiode zwischen der Drossel und dem Anschluss für den positiven oder negativen Pol der Spannungsquelle gebildet. Der Sekundärkreis ist in einer ersten Schaltungsalternative zumindest durch die Drossel, einen Anschluss für die kapazitive Last und einen zweiten Schalter mit einer Antiparalleldiode zwischen dem Anschluss für die kapazitive Last und der mit dem ersten Schalter verbundenen Seite der Drossel gebildet. In einer zweiten Schaltungsalternative ist der Sekundärkreis zumindest durch die Drossel, einen Transformator für den Anschluss der kapazitiven Last, einen zweiten Schalter mit einer Antiparalleldiode zwischen dem Transformator und der mit dem ersten Schalter verbundenen Seite der Drossel und einem Kondensator bzw. einer Kapazität zwischen dem Transformator und dem zweiten Schalter gebildet. In beiden Alternativen teilen sich der Primärkreis und der Sekundärkreis die Drossel für die Zwischenspeicherung der Energie zum Betrieb der kapazitiven Last. Bei der Spannungsquelle kann es sich je nach Anwendung auch um einen Zwischenkreis handeln.

Bei beiden Alternativen ist die Verschaltung derart, dass bei angeschlossener Spannungsquelle und angeschlossener Last
- in einer ersten Betriebsphase die Drossel bei geöffnetem zweiten Schalter durch Schließen des ersten Schalters (bzw. bei geschlossenem ersten Schalter) geladen wird,
- in einer sich an die erste Betriebsphase anschließenden zweiten Betriebsphase der Ladevorgang durch Öffnen des ersten Schalters beendet und die in der Drossel gespeicherte Energie auf die kapazitive Last übertragen wird,
- in einer sich an die zweite Betriebsphase anschließenden dritten Betriebsphase bei geöffnetem ersten Schalter durch Schließen des zweiten Schalters (bzw. bei geschlossenem zweiten Schalter) ein Energierückfluss in die Drossel und
- in einer sich an die dritte Betriebsphase anschließenden vierten Betriebsphase durch Öffnen des zweiten Schalters eine Rückspeisung der Energie aus der Drossel über die Antiparalleldiode des ersten Schalters in die Spannungsquelle erfolgt.

Bei den beiden Schaltern handelt es sich vorzugsweise um MOSFETs, die bereits eine entsprechende intrinsische Antiparalleldiode aufweisen. Es ist jedoch auch hier möglich, zusätzlich eine externe Antiparalleldiode vorzusehen. MOSFETs sind vor allem für Schaltfrequenzen im MHz-Bereich erforderlich. Bei geringeren Schaltfrequenzen im kHz-Bereich können als Schalter bspw. auch IGBTs eingesetzt werden. Die Ansteuerung der Schalter erfolgt in bekannter Weise über geeignete Signalgeber, ggf. mit Verstärker und den erforderlichen Treibern. Als Signalgeber kann bspw. ein Mikroprozessor zum Einsatz kommen. Da beide Schalter über einen Knoten miteinander verbunden sind, können bei der vorgeschlagenen Schaltungsanordnung kostengünstige Halbbrückentreiber eingesetzt werden.

Bei dem vorgeschlagenen Verfahren werden die Schalter der Schaltungsanordnung so betrieben, dass die obigen Betriebsphasen nacheinander durchlaufen werden. Die Schaltungsanordnung und das Verfahren erfordern in der Grundausführung lediglich zwei Schalter mit Antiparalleldioden sowie eine Drossel. Durch diesen einfachen Aufbau und die geringe Bauelementeanzahl lässt sich die Schaltungsanordnung kostengünstig realisieren und arbeitet mit höherer Zuverlässigkeit. Durch die vollständige Rückspeisung der in der kapazitiven Last gespeicherten Energie in den die Spannungsquelle bzw. den Zwischenkreis in der dritten und vierten Betriebsphase wird eine höhere Effizienz des Betriebs der kapazitiven Last erreicht. Die Spannung über der kapazitiven Last zwischen den Pulspausen ist konstant und liegt bei nahe 0 V. Dies erhöht ebenfalls die Effizienz der Schaltungsanordnung.

Die Schaltungsanordnung und das Verfahren ermöglichen auch die Einstellung einer variablen Pulslänge bzw. die Generierung eines Pulsplateaus durch Variation des Schaltzeitpunktes des zweiten Schalters in der dritten Betriebsphase. Weiterhin wird mit der Schaltungsanordnung und dem Verfahren eine induzierte Spannungsüberhöhung über der kapazitiven Last erreicht. Die für den ersten Schalter zu schaltende Kapazität ist in jedem Fall kleiner als die Kapazität des zweiten Schalters. Daher ergeben sich geringere Verluste beim Einschalten des ersten Schalters. Die Schaltverlustleistung (Öffnen unter Strom) ist auf beide Schalter verteilt.

Die Schaltungsanordnung kommt in der Grundausführung mit einer geringeren Anzahl an Bauteilen aus als die Schaltungsanordnung der in der Beschreibungseinleitung genannten DE 10 2004 021 243 B3.

Bei der vorgeschlagenen Schaltungsanordnung und dem zugehörigen Verfahren werden ein Primär- und ein Sekundärkreis eingesetzt, die vom Strom alternierend durchflossen werden. Die beiden Schalter im Primär- bzw. Sekundärkreis verfügen über eine intrinsische oder eine externe Antiparalleldiode. Der im Primärkreis befindliche erste Schalter und der im Sekundärkreis befindliche zweite Schalter sind so verschaltet, dass kein Stromfluss von der Versorgungsquelle zur Last möglich ist, wenn beide Schalter ausgeschaltet sind. Die beiden Schalter sind an einem Knotenpunkt miteinander verbunden und werden beim Betrieb der Schaltungsanordnung nie gleichzeitig aktiviert, d. h. eingeschaltet. Die Drossel bzw. Induktivität übernimmt die Zwischenspeicherung der an die Last zur transferierenden Energie. Die Induktivität wird dabei sowohl für das Aufladen als auch das Entladen (und die Rückspeisung der Energie) der kapazitiven Last genutzt. Der zweite Schalter ist so in den Sekundärkreis eingefügt, dass kein Strom vom Primärkreis in den Sekundärkreis fließen kann, solange die Spannung über der Induktivität größer als die Spannung über der kapazitiven Last ist. Im offenen Zustand bewirkt der zweite Schalter, dass zum Zeitpunkt des Rückspeisens der Energie durch die Antiparalleldiode des ersten Schalters die Spannung über der kapazitiven Last einen Wert nahe 0 V annimmt. Die kapazitive Last liegt parallel zu der die Energie zwischenspeichernden Induktivität und kann durch den zweiten Schalter in einer Stromflussrichtung von ihr getrennt werden. Dadurch kann die Pulslänge variiert werden. Der zweite Schalter muss dabei jedoch für die dann auftretende Spannungsbelastung ausgelegt sein.

Weist die kapazitive Last einen Leistungsfaktor von 0 auf, so entspricht der durch sie fließende Strom einer Cosinushalbwelle. Die Pulsspannungsform entspricht einer Sinushalbwelle. Die zum Zeitpunkt betragsmäßig maximaler Pulsspannung in der kapazitiven Last gespeicherte Energie, bzw. die nicht durch die in der kapazitiven Last aufgenommene Wirkleistung dem Kreis entnommene Energie, wird durch die Energierückspeisung vollständig aus dem Sekundärkreis und damit vollständig von der kapazitiven Last zurückgenommen. Während der Pulspause liegt eine Spannung von nahe 0 V über der kapazitiven Last an. Dies minimiert den Effektivwert der über der kapazitiven Last anliegenden Spannung. Der zweite Schalter kann damit spannungsfrei (ZVS: zero voltage switching) und somit nahezu verlustlos eingeschaltet werden. In einer vorteilhaften Ausgestaltung kann auch der erste Schalter mit ZVS wieder eingeschaltet werden, wenn dies im Zeitraum der Rückspeisung der Energie erfolgt. Einerseits können damit Leitendverluste reduziert werden und andererseits der erste Schalter nahezu verlustlos eingeschaltet werden.

Während der Pulspause wird durch die Reihenschaltung des zweiten Schalters mit der kapazitiven Last die resultierende Kapazität maßgeblich verringert. Dadurch werden parasitäre Resonanzen, insbesondere die Parallelresonanz zwischen der Induktivität und der Reihenschaltung aus dem zweiten Schalter und der kapazitiven Last, maßgeblich gedämpft.

Wird der zweite Schalter zu einem Zeitpunkt geöffnet, nachdem die Spannung über der kapazitiven Last bereits ihren betragsmäßigen Maximalwert erreicht hat, kann der'Puls in seiner Dauer verlängert bzw. ein Spannungsplateau erzeugt werden. Dies wird durch die Auftrennbarkeit von Primär- und Sekundärkreis durch den zweiten Schalter ermöglicht. Die Schaltungsanordnung und das Verfahren erreichen höchste Spannungsanstiege an den Pulswurzeln, d. h. zu Beginn und zum Ende des Pulses. Im Falle des Betriebs von DBE-Lampen unterstützt der hohe (negative) Spannungsanstieg zum Ende des Pulses eine intensive Rückzündung, die für eine homogene Entladung maßgeblich ist.

In der zweiten Schaltungsalternative wird mit dem Transformator die Spannungsbelastung des ersten und des zweiten Schaltelementes verringert. In einer Weiterbildung dieser Ausgestaltung kann im Sekundärkreis parallel zur Reihenschaltung aus Transformator und Kondensator eine Diode angeordnet werden, die die Spannung über dem zweiten Schalter auf die Versorgungsspannung begrenzt. Weiterhin kann eine weitere Diode parallel zur Reihenschaltung aus erstem Schalter, zweitem Schalter und Kondensator angeordnet werden. Durch diese weitere Diode lässt sich die Spannung über der kapazitiven Last während der Pulspausen begrenzen.

Die vorgeschlagene Schaltungsanordnung sowie das zugehörige Verfahren eignen sich für das Laden und Entladen von kapazitiven Lasten, insbesondere im Pulsbetrieb. Eine besonders vorteilhafte Anwendung stellt der Betrieb von dielektrisch behinderten Entladungslampen (DBE) dar, wie sie bspw. in der Beleuchtungstechnik, in der UV-Technik, bspw. zur Oberflächenbehandlung oder Reinigung von Gasen und Flüssigkeiten, in der Ozonproduktion oder in der Papier- oder Halbleiterindustrie zur Oberflächenbehandlung eingesetzt werden. Mit der Schaltungsanordnung und dem Verfahren lassen sich bspw. auch Leistungshalbleiter wie MOSFETs oder IGBTs, piezoelektrische Aktuatoren, bspw. in der Medizin- oder Automatisierungstechnik, sowie Halbleiterbauelemente zur Licht-/Strahlungserzeugung (z. B. LEDs oder Laser) effizient ansteuern. Das Verfahren und die Schaltungsanordnung ermöglichen es, diese Lasten effizient mit pulsförmigen Spannungsformen zu betreiben, wobei die Energie in den Pulspausen der Last entnommen und zur Versorgungsquelle zurückgespeist wird. Die Länge des Pulses kann variabel eingestellt werden. Die Anstiegsgeschwindigkeit kann über die Vorladezeit der Induktivität bzw. Drossel variiert werden. Auch eine Anpassung an verschiedene, auch dynamische Kapazitäten ist damit möglich.

### Kurze Beschreibung der Zeichnungen

Die vorgeschlagene Schaltungsanordnung sowie das zugehörige Verfahren für den Betrieb kapazitiver Lasten werden nachfolgend anhand von Ausführungsbeispielen in Verbindung mit den Zeichnungen nochmals näher erläutert. Hierbei zeigen:
- Fig. 1: ein erstes Beispiel für eine Ausgestaltung der vorgeschlagenen Schaltungsanordnung;
- Fig. 2: ein Beispiel für unterschiedliche Betriebsphasen der Schaltungsanordnung nach Figur 1 für den Betrieb einer kapazitiven Last;
- Fig. 3: die zeitabhängigen Amplituden der Ströme und Spannungen bei dem Betrieb gemäß Figur 2;
- Fig. 4: ein experimentelles Ergebnis für den Pulsbetrieb eines Kondensators mit der Schaltungsanordnung gemäß Figur 1;
- Fig. 5: ein experimentelles Ergebnis für den Betrieb einer DBE-Lampe mit der Schaltungsanordnung gemäß Figur 11A;
- Fig. 6: ein weiteres Beispiel für die Ansteuerung der Schalter der Schaltungsanordnung gemäß Figur 1;
- Fig. 7: ein weiteres Beispiel für die Ansteuerung der Schalter der Schaltungsanordnung gemäß Figur 1;
- Fig. 8: ein weiteres Beispiel für eine Ausgestaltung der vorgeschlagenen Schaltungsanordnung;
- Fig. 9: ein weiteres Beispiel für eine Ausgestaltung der vorgeschlagenen Schaltungsanordnung;
- Fig. 10: zwei weitere Beispiele für eine Ausgestaltung der vorgeschlagenen Schaltungsanordnung; und
- Fig. 11: zwei weitere Beispiele für eine Ausgestaltung der vorgeschlagenen Schaltungsanordnung.

### Wege zur Ausführung der Erfindung

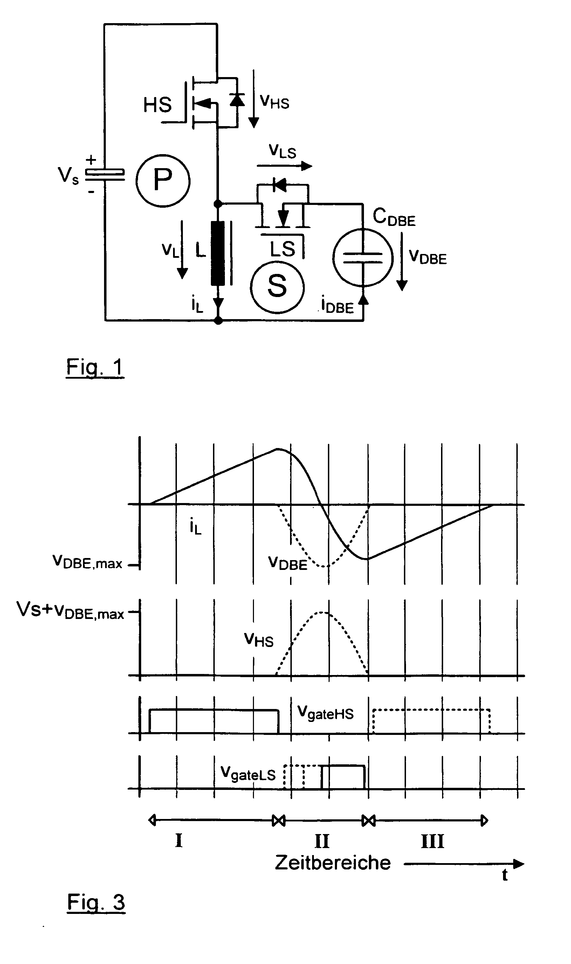

Die vorgeschlagene Schaltungsanordnung ermöglicht bei entsprechender Ansteuerung sowohl die Vorladung der Drossel und die Abgabe der gespeicherten Energie an die kapazitive Last als auch die Rückgewinnung dieser Energie durch erneute Ladung der Drossel und Rückspeisung in den Zwischenkreis bzw. die Versorgungsspannung. Ein Beispiel für diese Schaltungsanordnung ist in Figur 1 dargestellt. Die Schaltungsanordnung setzt sich aus dem Primärkreis P und dem Sekundärkreis S zusammen. Die Spannungen v und Ströme i sind in der Figur mit entsprechendem Richtungssinn eingetragen. In diesem Beispiel wird eine dielektrisch behinderte Entladungslampe DBE mit der Schaltungsanordnung betrieben. Der Primärkreis wird hierbei durch den ersten Schalter HS (high side switch) mit Antiparalleldiode, die Drossel L sowie die Anschlüsse für den positiven und negativen Pol der Versorgungsspannung Vₛ gebildet. Den Sekundärkreis bilden die kapazitive Last C_{DBE}, der zweite Schalter LS (low side switch) mit entsprechender Antiparalleldiode sowie wiederum die Drossel L.

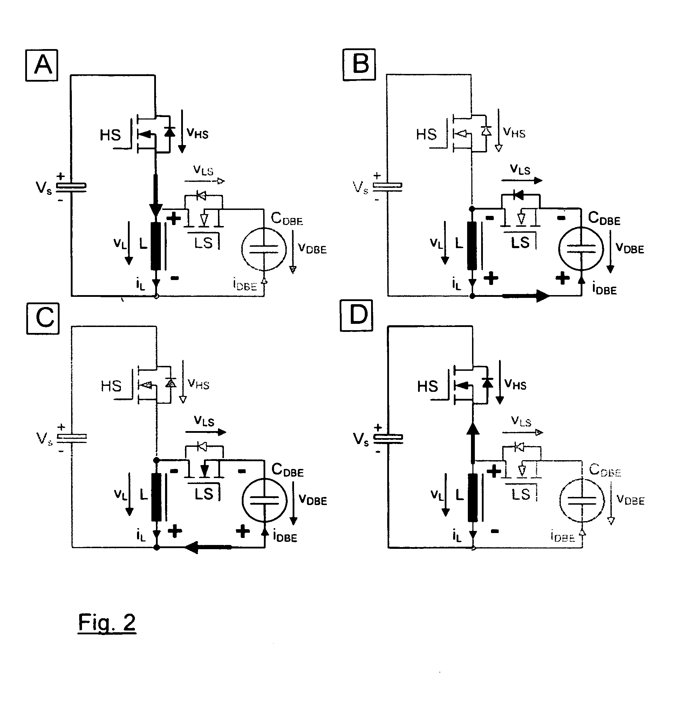

Die Figur 2 zeigt eine Abfolge der vier Betriebsphasen bzw. Betriebszustände beim Betrieb der Schaltungsanordnung zum Laden und Entladen der kapazitiven Last. Die jeweilige Energiemenge ist durch die Vorladezeit der Drossel L in weiten Grenzen einstellbar. Durch Schließen des ersten Schalters HS wird in der ersten Betriebsphase A die Vorladung der Drossel initiiert (Zeitbereich I in Figur 3). Der Strom i_{L} steigt linear an, die gespeicherte Energie steigt quadratisch mit dem Strom. Nach Beendigung der Vorladung durch Schließen des ersten Schalters HS läuft die Drossel frei, d. h. um die Kontinuität des Stromes zu gewährleisten, baut sich eine Spannung negativer Polarität über der Drossel L auf. Der Strom fließt in dieser zweiten Betriebsphase B weiter und lädt gemäß Figur 2 über die Antiparalleldiode des zweiten Schalters LS die kapazitive Last C_{DBE} (erste Hälfte des Zeitbereichs II in Figur 3). Nach erfolgter Ladung liegt die maximale Spannung V_{DBE, max} an der Entladungslampe an, die abhängig ist von der Vorladezeit, der Induktivität L, der Kapazität C_{DBE} der kapazitiven Last und dem unter Umständen dynamischen Leistungsfaktor der kapazitiven Last. Zu diesem Zeitpunkt ist die Energie des Kreises in der Kapazität C_{DBE} gespeichert. Die Energie in der Drossel ist 0. Kurz vor Erreichen des Spannungsmaximums an der kapazitiven Last, d. h. bevor i_{L} = 0 A, wird der zweite Schalter LS geschlossen, so dass die dritte Betriebsphase C beginnt. Das Schließen des zweiten Schalters LS ist damit mit ZVS möglich. Der Schaltvorgang ist dann nahezu verlustfrei. Es erfolgt nun das Rückschwingen der Energie in die Drossel L in der dritten Betriebsphase C (zweite Hälfte des Zeitbereichs II in Figur 3). Zu einem Zeitpunkt, an dem der Strom i_{L} nahezu den Maximalwert erreicht hat, wird der zweite Schalter LS geöffnet. Hier beginnt die vierte Betriebsphase D. Die Drossel läuft nun in den Zwischenkreis bzw. die Spannungsquelle frei und gibt die in ihr gespeicherte Energie an diese(n) ab. Der Strom fließt dabei über die Antiparalleldiode des ersten Schalters HS.

Diese Pulsgeneration, d. h. die Erzeugung eines Spannungspulses über der kapazitiven Last, kann zu beliebigen Zeitpunkten wiederholt werden. Besonders vorteilhaft wird für die erneute Pulsinitiation der erste Schalter HS noch in der vorangehenden vierten Betriebsphase geschlossen, d. h. noch vor dem Nulldurchgang des Rückspeisestromes. Dadurch kann auch der erste Schalter HS mit ZVS und damit nahezu verlustfrei geschlossen werden. Die Rückspeisung der Energie in die Versorgungsspannung geht dann nahtlos in eine erneute Vorladung der Drossel gemäß der ersten Betriebsphase über.

Figur 3 zeigt die zeitabhängigen Amplituden der Ströme und Spannungen der vorgeschlagenen Schaltungsanordnung in der oben beschriebenen Betriebsweise. Den unteren beiden Diagrammen sind dabei die Gatespannungen der beiden Schalter zu entnehmen. Diese beiden Diagramme zeigen somit die Ansteuerung dieser Schalter. Es ist ersichtlich, dass zu keinem Zeitpunkt beide Schalter gleichzeitig geschlossen sind. Durch die gepunkteten Linien in diesen beiden unteren Diagrammen soll angedeutet werden, dass zum Einen der erste Schalter HS bereits während der vierten Betriebsphase (zu einem beliebigen Zeitpunkt) wieder geschlossen werden kann und dass zum Anderen das Schließen des zweiten Schalters LS ebenfalls zu unterschiedlichen Zeitpunkten bereits während der Ladung der kapazitiven Last erfolgen kann.

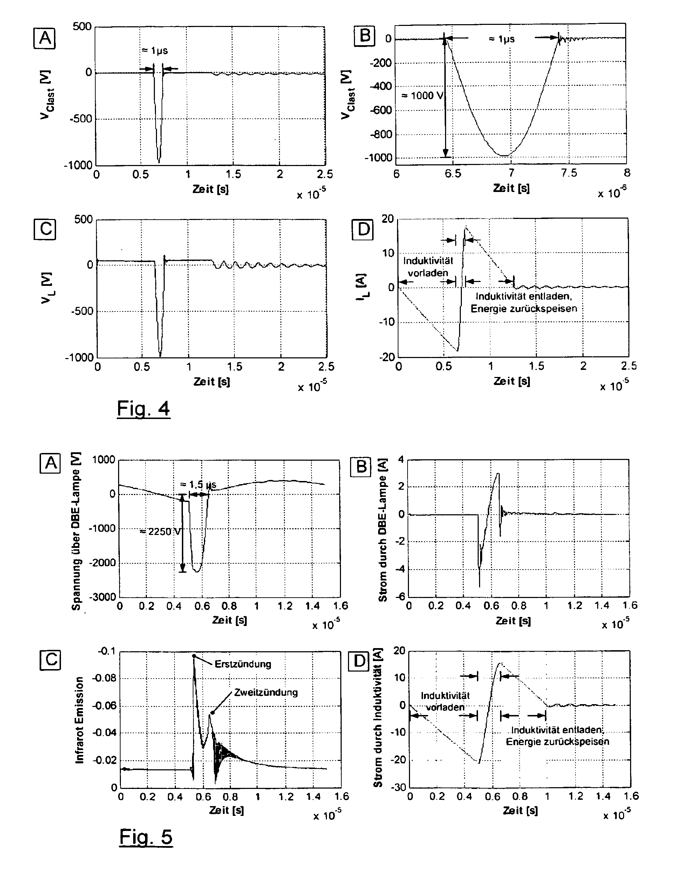

Figur 4 zeigt experimentelle Ergebnisse für den Pulsbetrieb eines 4,7 nF Kondensators mit der in der Figur 1 gezeigten Grundschaltung. Teilabbildung A zeigt hierbei die Spannung über dem Kondensator während der gesamten Periode. Teilabbildung B zeigt nur den Zeitbereich mit dem erzeugten Spannungspuls. Teilabbildung C zeigt die Spannung über der Induktivität beim Ladevorgang, der Entladung über den Kondensator, dem Rückschwingen und der Energierückspeisung. Teilabbildung D zeigt den Strom durch die Induktivität in diesen vier Betriebsphasen. Bei einer Versorgungsspannung von 56 V und einer Pulswiederholrate von 40 kHz erreicht die Schaltungsanordnung einen elektrischen Wirkungsgrad von 86 % beim Pulsbetrieb eines 4,7 nF Kondensators. Der Puls selbst, wie er in Figur 4B zu erkennen ist, stellt eine Sinushalbwelle mit 1 µs Breite und einer maximalen Amplitude von 1 kV dar. Aus der Figur 4 ist auch zu erkennen, dass die Pulswiederholrate so klein gewählt wurde, dass es nach Beendigung der Rückspeisung bei t = 12,5 µs zu schwach ausgeprägten Oszillationen kommt.

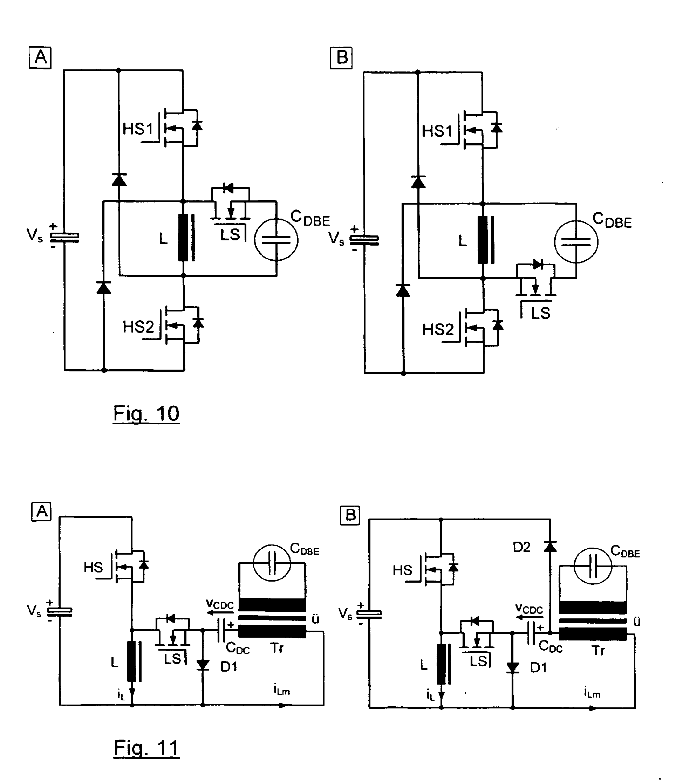

In Figur 5 sind experimentelle Ergebnisse beim Betrieb einer DBE-Lampe (OSRAM PLANON^{®} ) mit der Schaltungsanordnung gemäß Figur 11A dargestellt. Die DBE-Lampe wurde mit Pulsen betrieben, wie sie in der Figur 5A erkennbar sind. Sowohl eine intensive Hin- wie auch eine Rückzündung pro Puls wurden initiiert. Die Zündungen wurden experimentell durch Nachweis der bei der Zündung auftretenden IR-Strahlung detektiert. Dies ist aus Figur 5C ersichtlich. Figur 5B zeigt den Strom durch die DBE-Lampe, Figur 5D den Strom durch die Induktivität. Die Pulswiederholrate betrug 40 kHz. In Figur 5A ist zu erkennen, dass außerhalb des eigentlichen Pulses bei dieser Ausgestaltungsform eine parasitäre Parallelresonanz auftritt. Diese wird angeregt zwischen der Transformatorhauptinduktivität des eingesetzten Transformators Tr und allen dazu parallel liegenden Kapazitäten, d. h. der kapazitiven Last sowie der Kapazität des zweiten Schalters LS.

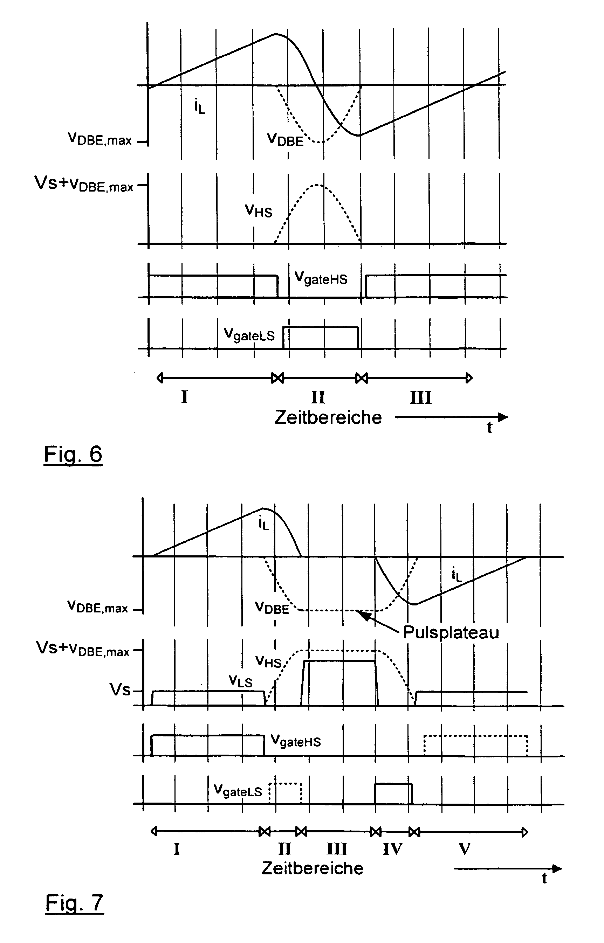

Figur 6 zeigt ein weiteres Beispiel für eine Betriebsweise der vorgeschlagenen Schaltungsanordnung, bspw. in einer Ausgestaltung wie die der Figur 1. Die Ansteuerung der beiden Schalter HS und LS erfolgt hier in der Weise, dass sie sich in der Kommutierung des Stromes gerade abwechseln. Je nach gewünschter Repetitionsrate des Pulses kann für als konstant angenommene Lastkapazität und Induktivität die Betriebsspannung durch eine externe Vorrichtung so eingestellt werden, dass die primärseitige Drossellade-und -entladezeit gerade der Pulspause entspricht. Der erste Schalter HS wird dann frühestens zu Beginn der Rückspeisung, spätestens jedoch vor Stromumkehr eingeschaltet (d.h. geschlossen) und bleibt nach Stromumkehr so lange eingeschaltet, bis der gewünschte Ladestrom der Induktivität erreicht ist. Die Versorgungsspannung wird dabei in Abhängigkeit von der Repetitionsrate so gewählt oder (dynamisch) eingestellt, dass der Strom durch die Induktivität nahtlos fließen kann. Dadurch wird das Einschalten von HS unter ZVS-Bedingung erreicht.

Figur 7 zeigt ein weiteres Beispiel für eine mögliche Ansteuerung der beiden Schalter HS und LS insbesondere für die Schaltungsanordnung nach Figur 1. Bei dieser Art der Ansteuerung wird der Puls verlängert, so dass sich ein Spannungsplateau ausbildet. Dies kann zum Betrieb von Piezoaktuatoren oder zur Ansteuerung von Leistungshalbleitern vorteilhaft oder notwendig sein. Für den Betrieb von DBE-Lampen ergibt sich der Vorteil, über die Länge des Pulses den zeitlichen Abstand von Hin- und Rückzündung variieren zu können. Die Variation des Pulses in seiner Länge erfolgt dadurch, dass der zweite Schalter LS unmittelbar nach erfolgter Ladung der kapazitiven Last, d.h. nach Erreichen des Spannungsmaximums über der Last, ausgeschaltet (d.h. geöffnet) wird (gestrichelte Linie im untersten Diagramm der Figur 7), oder vorher gar nicht erst eingeschaltet wurde. Der zweite Schalter LS sorgt somit für eine Trennung von Primär- und Sekundärkreis und verhindert damit jeglichen Stromfluss, der die kapazitive Last entladen könnte. Wird der zweite Schalter LS darauf folgend geschlossen (durchgezogene Linie im untersten Diagramm der Figur 7) so wird der Sekundärkreis wieder geschlossen und der Energietransfer von der kapazitiven Last zur Induktivität kann stattfinden. Auch hier kann der erste Schalter noch während der Rückspeisung der Energie in den Zwischenkreis wieder geschlossen werden (gestrichelte Linie im vorletzten Diagramm der Figur 7), wie dies bereits in Verbindung mit Figur 3 erläutert wurde. Das mit dieser Betriebsweise erreichte Pulsplateau ist in der Figur im oberen Diagramm erkennbar.

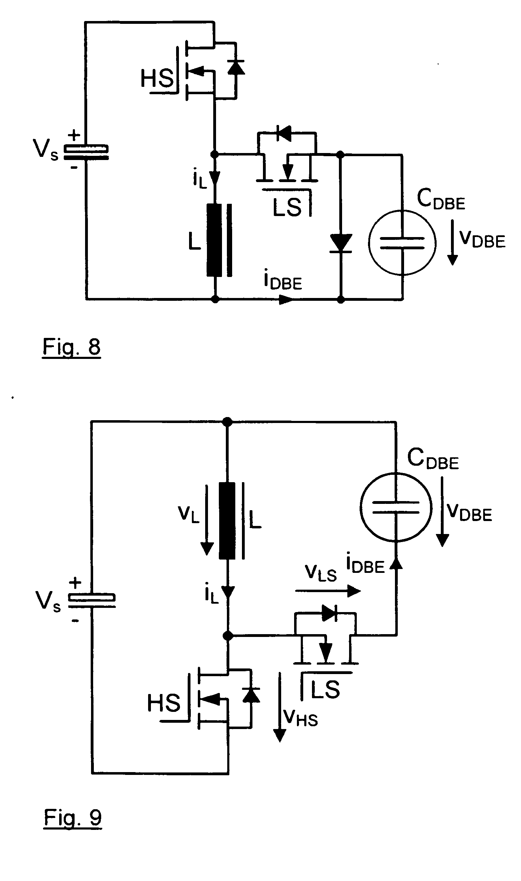

Figur 8 zeigt eine weitere Ausgestaltung der vorgeschlagenen Schaltungsanordnung. Bei dieser Ausgestaltung wurde zusätzlich eine Diode parallel zur kapazitiven Last C_{DBE} angeordnet. Diese zusätzliche Diode verhindert positive Spannungen über der kapazitiven Last. Gleichzeitig begrenzt diese Diode die Spannungsbelastung des zweiten Schalters LS auf maximal die Betriebsspannung Vₛ.

Figur 9 zeigt eine Ausgestaltung der vorgeschlagenen Schaltungsanordnung, bei der lediglich die Schaltung der Figur 1 invertiert wurde. Die Last ist hierbei mit der positiven Versorgungsspannung verbunden, der zweite Schalter LS mit der negativen Versorgungsspannung.

Figur 12 zeigt zwei weitere mögliche Ausgestaltungen der vorgeschlagenen Schaltungsanordnung, mit denen die maximale Spannung über der Drossel und dem ersten Schalter HS begrenzt wird. Hierzu sind ein zusätzlicher Schalter mit Antiparalleldiode im Primärkreis und zwei zusätzliche Dioden erforderlich, wie dies in der Figur erkennbar ist. Der zusätzliche Schalter wird dabei jeweils zeitgleich zum ersten Schalter ein- und ausgeschaltet. Durch die zeitweise Kopplung des Primärkreises mit dem Sekundärkreis betrifft die damit erreichte Spannungsbegrenzung auch die kapazitive Last.

Figur 11 zeigt schließlich zwei weitere mögliche Ausgestaltungen der vorgeschlagenen Schaltungsanordnung. In diesen Ausgestaltungen wird ein Transformator Tr mit einem Übersetzungsverhältnis ü eingesetzt, um die Spannungsbelastung des ersten Schalters HS, insbesondere im Fall des Betriebs mit Pulsverlängerung, zu verringern. Um einen Freilauf der Transformatorinduktivität zu gewährleisten, wird zwischen dem Transformator Tr und dem zweiten Schalter LS eine Kapazität bzw. ein Kondensator C_{DC} eingefügt. Dieser wird durch den nach dem Puls weiter fließenden Magnetisierungsstrom i_{Lm} auf positive Werte V_{CDC} aufgeladen. Um die Spannungsbelastung des zweiten Schalters LS im Falle eines Rückschwingens des Stromes während der Pulspause nicht über die Versorgungsspannung Vₛ hinweg zu vergrößern, wird eine zusätzliche Diode D1 parallel zu der Reihenschaltung aus Transformator Tr und Kondensator C_{DC} angeordnet.

In der zweiten Ausgestaltung dieses Beispiels, wie sie in Figur 11B dargestellt ist, wird zusätzlich eine zweite Diode D2 parallel zu der Reihenschaltung aus erstem Schalter HS, zweitem Schalter LS und Kondensator C_{DC} angeordnet. Durch diese zweite Diode D2 wird die maximale Spannung über der kapazitiven Last C_{DBE} während der Pulspause auf Vₛ x ü begrenzt.

## Patentansprüche

1. Schaltungsanordnung für den Betrieb einer kapazitiven Last, insbesondere einer dielektrisch behinderten Entladungslampe, umfassend:
- einen Primärkreis (P) und einen Sekundärkreis (S),
- wobei der Primärkreis (P) zumindest durch einen Anschluss für einen positiven und einen negativen Pol einer Spannungsquelle, eine Drossel (L) und einen ersten Schalter (HS) mit einer Antiparalleldiode zwischen der Drossel (L) und dem Anschluss für den positiven oder negativen Pol der Spannungsquelle gebildet wird, und
- wobei der Sekundärkreis (S) zumindest durch die Drossel (L), einen Anschluss für die kapazitive Last (C_{DBE}) und einen zweiten Schalter (LS) mit einer Antiparalleldiode zwischen dem Anschluss für die kapazitive Last (C_{DBE}) und der mit dem ersten Schalter (HS) verbundenen Seite der Drossel (L) gebildet wird.

2. Schaltungsanordnung für den Betrieb einer kapazitiven Last, insbesondere einer dielektrisch behinderten Entladungslampe, umfassend:
- einen Primärkreis (P) und einen Sekundärkreis (S),
- wobei der Primärkreis (P) zumindest durch einen Anschluss für einen positiven und einen negativen Pol einer Spannungsquelle, eine Drossel (L) und einen ersten Schalter (HS) mit einer Antiparalleldiode zwischen der Drossel (L) und dem Anschluss für den positiven oder negativen Pol der Spannungsquelle gebildet wird, und
- wobei der Sekundärkreis (S) zumindest durch die Drossel (L), einen Transformator (Tr) für den Anschluss der kapazitiven Last (C_{DBE}), einen zweiten Schalter (LS) mit einer Antiparalleldiode zwischen dem Transformator (Tr) und der mit dem ersten Schalter (HS) verbundenen Seite der Drossel (L) und einem Kondensator (C_{DC}) zwischen dem Transformator (Tr) und dem zweiten Schalter (LS) gebildet wird.

3. Schaltungsanordnung nach Anspruch 2,
**dadurch gekennzeichnet,**
**dass** im Sekundärkreis (S) parallel zur Reihenschaltung aus Transformator (Tr) und Kondensator (C_{DC}) eine Diode (D1) angeordnet ist, die eine Spannung über dem zweiten Schalter (LS) auf die Höhe der Versorgungsspannung begrenzt.

4. Schaltungsanordnung nach Anspruch 2 oder 3,
**dadurch gekennzeichnet,**
**dass** parallel zu einer Reihenschaltung aus erstem Schalter (HS), zweitem Schalter (LS) und Kondensator (C_{DC}) eine Diode angeordnet (D2) ist, die eine Spannung über der kapazitiven Last (C_{DBE}) während einer Pulspause begrenzt.

5. Schaltungsanordnung nach Anspruch 1,
**dadurch gekennzeichnet,**
**dass** im Sekundärkreis (S) parallel zum Anschluss für die kapazitive Last (C_{DBE}) eine Diode verschaltet ist, die positive Spannungen über der kapazitiven Last (C_{DBE}) verhindert.

6. Schaltungsanordnung nach einem der Ansprüche 1 bis 5, **dadurch gekennzeichnet,**
**dass** im Primärkreis (P) auf einer dem ersten Schalter (HS) gegenüberliegenden Seite der Drossel (L) ein dritter Schalter (HS2) mit einer Antiparalleldiode, parallel zu der Reihenschaltung aus Drossel (L) und erstem Schalter (HS) eine erste Diode und parallel zu der Reihenschaltung aus Drossel (L) und drittem Schalter (HS2) eine zweite Diode angeordnet sind.

7. Schaltungsanordnung nach einem der Ansprüche 1 bis 6 mit einer Ansteuerschaltung, die so ausgebildet ist, dass sie die Schalter in zeitlicher Abfolge so ansteuert, dass
- in einer ersten Betriebsphase die Drossel (L) über die Spannungsquelle geladen wird,
- in einer sich an die erste Betriebsphase anschließenden zweiten Betriebsphase in der Drossel (L) gespeicherte Energie auf die kapazitive Last (C_{DBE}) übertragen wird,
- in einer sich an die zweite Betriebsphase anschließenden dritten Betriebsphase ein Energierückfluss in die Drossel (L) und
- in einer sich an die dritte Betriebsphase anschließenden vierten Betriebsphase eine Rückspeisung von Energie aus der Drossel (L) über die Antiparalleldiode des ersten Schalters (HS) in die Spannungsquelle erfolgt.

8. Schaltungsanordnung nach Anspruch 7,
**dadurch gekennzeichnet,**
**dass** die Ansteuerschaltung so ausgebildet ist, dass sie den zweiten Schalter (LS) in der zweiten Betriebsphase zu einem Zeitpunkt schließt, der vor Erreichen eines Spannungsmaximums an der kapazitiven Last (C_{DBE}) liegt.

9. Schaltungsanordnung nach Anspruch 7 oder 8,
**dadurch gekennzeichnet,**
**dass** die Ansteuerschaltung so ausgebildet ist, dass sie den zweiten Schalter (LS) zum Zeitpunkt oder unmittelbar nach dem Zeitpunkt des vollständigen Energieübertrags von der Drossel (L) auf die kapazitive Last (C_{DBE}) öffnet oder bei geöffnetem Schalter nicht schließt und erst nach einem vorgebbaren Zeitintervall wieder schließt, um dadurch den Beginn der dritten Betriebsphase zu verzögern und einen um das Zeitintervall verlängerten Spannungspuls zu erhalten.

10. Schaltungsanordnung nach einem der Ansprüche 7 bis 9, **dadurch gekennzeichnet,**
**dass** die Ansteuerschaltung so ausgebildet ist, dass sie den ersten Schalter (HS) vor einem erneutem Beginn der ersten Betriebsphase zu einem Zeitpunkt zum Schließen ansteuert, der noch vor einem Nulldurchgang eines Rückspeisestroms bei der Rückspeisung von Energie in der vorangehenden vierten Betriebsphase liegt.

11. Verfahren für den Betrieb einer kapazitiven Last mit der Schaltungsanordnung nach einem der Patentansprüche 1 bis 6, bei dem die Schalter der Schaltungsanordnung so zum Öffnen und Schließen angesteuert werden, dass
- in einer ersten Betriebsphase die Drossel (L) über die Spannungsquelle geladen wird,
- in einer sich an die erste Betriebsphase anschließenden zweiten Betriebsphase in der Drossel (L) gespeicherte Energie auf die kapazitive Last (C_{DBE}) übertragen wird,
- in einer sich an die zweite Betriebsphase anschließenden dritten Betriebsphase ein Energierückfluss in die Drossel (L) und
- in einer sich an die dritte Betriebsphase anschließenden vierten Betriebsphase eine Rückspeisung von Energie aus der Drossel (L) über die Antiparalleldiode des ersten Schalters (HS) in die Spannungsquelle erfolgt.

12. Verfahren nach Anspruch 11,
**dadurch gekennzeichnet,**
**dass** der zweite Schalter (LS) in der zweiten Betriebsphase zu einem Zeitpunkt geschlossen wird, der vor Erreichen eines Spannungsmaximums an der kapazitiven Last (C_{DBE}) liegt.

13. Verfahren nach Anspruch 11 oder 12,
**dadurch gekennzeichnet,**
**dass** der zweite Schalter (LS) zum Zeitpunkt oder unmittelbar nach dem Zeitpunkt des vollständigen Energieübertrags von der Drossel (L) auf die kapazitive Last (C_{DBE}) geöffnet oder bei bereits geöffnetem Schalter offen gehalten und erst nach einem vorgebbaren Zeitintervall wieder geschlossen wird, um dadurch den Beginn der dritten Betriebsphase zu verzögern und einen um das Zeitintervall verlängerten Spannungspuls zu erhalten.

14. Verfahren nach einem der Ansprüche 11 bis 13,
**dadurch gekennzeichnet,**
**dass** der erste Schalter (HS) vor einem erneutem Beginn der ersten Betriebsphase zu einem Zeitpunkt geschlossen wird, der noch vor einem Nulldurchgang eines Rückspeisestroms bei der Rückspeisung von Energie in der vorangehenden vierten Betriebsphase liegt.

15. Verfahren nach einem der Ansprüche 11 bis 14,
**dadurch gekennzeichnet,**
**dass** durch Steuern einer weiteren Vorrichtung die Versorgungsspannung der Schaltungsanordnung nach einem der Ansprüche 1 bis 10 so eingestellt wird, dass der Drosselstrom kontinuierlich fließt und der erste Schalter (HS) daher mit ZVS-Bedingung eingeschaltet werden kann.

## Claims

1. Circuit arrangement for the operation of a capacitive load, in particular a dielectric-barrier discharge lamp, comprising:
- a primary circuit (P) and a secondary circuit (S),
- the primary circuit (P) being formed at least by a connection for a positive and a negative pole of a voltage source, an inductor (L) and a first switch (HS) comprising an anti-parallel diode between the inductor (L) and the connection for the positive or negative pole of the voltage source, and
- the secondary circuit (S) being formed at least by the inductor (L), a connection for the capacitive load (C_{DBE}) and a second switch (LS) comprising an anti-parallel diode between the connection for the capacitive load (C_{DBE}) and the side of the inductor (L) connected to the first switch (HS).

2. Circuit arrangement for the operation of a capacitive load, in particular a dielectric-barrier discharge lamp, comprising:
- a primary circuit (P) and a secondary circuit (S),
- the primary circuit (P) being formed at least by a connection for a positive and a negative pole of a voltage source, an inductor (L) and a first switch (HS) comprising an anti-parallel diode between the inductor (L) and the connection for the positive or negative pole of the voltage source, and
- the secondary circuit (S) being formed at least by the inductor (L), a transformer (Tr) for the connection of the capacitive load (C_{DBE}), a second switch (LS) comprising an anti-parallel diode between the transformer (Tr) and the side of the inductor (L) connected to the first switch (HS), and a capacitor (C_{DC}) between the transformer (Tr) and the second switch (LS).

3. Circuit arrangement according to Claim 2,
**characterised in that**
in the secondary circuit (S) a diode (D1) is arranged in parallel with the series circuit consisting of the transformer (Tr) and the capacitor (C_{DC}), said diode limiting a voltage across the second switch (LS) to the level of the supply voltage.

4. Circuit arrangement according to Claim 2 or 3,
**characterised in that**
a diode (D2) is arranged in parallel with a series circuit consisting of the first switch (HS), second switch (LS) and the capacitor (C_{DC}) said diode limiting a voltage across the capacitive load (C_{DBE}) during a pulse pause.

5. Circuit arrangement according to Claim 1,
**characterised in that**
a diode is arranged in the secondary circuit (S) in parallel with the connection for the capacitive load (C_{DBE}), said diode preventing positive voltages across the capacitive load (C_{DBE}).

6. Circuit arrangement according to one of Claims 1 to 5,
**characterised in that**
in the primary circuit (P), a third switch (HS2) comprising an anti-parallel diode is arranged on a side of the inductor (L) opposing the first switch (HS), a first diode is arranged in parallel with the series circuit consisting of the inductor (L) and the first switch (HS) and a second diode is arranged in parallel with the series circuit consisting of the inductor (L) and the third switch (HS2).

7. Circuit arrangement according to one of Claims 1 to 6, comprising a control circuit which is configured such that it controls the switch in a chronological sequence, such that
- in a first operating phase the inductor (L) is charged via the voltage source,
- in a second operating phase following the first operating phase, energy stored in the inductor (L) is transmitted to the capacitive load (C_{DBE}),
- in a third operating phase following the second operating phase, energy is fed back into the inductor (L) and
- in a fourth operating phase following the third operating phase, energy is fed back from the inductor (L) via the anti-parallel diode of the first switch (HS) into the voltage source.

8. Circuit arrangement according to Claim 7,
**characterised in that**
the control circuit is configured such that it closes the second switch (LS) in the second operating phase at a time before a maximum voltage is reached on the capacitive load (C_{DBE}) .

9. Circuit arrangement according to Claim 7 or 8,
**characterised in that**
the control circuit is configured such that it opens the second switch (LS) at the time or immediately after the time when the energy has been fully transmitted from the inductor (L) to the capacitive load (C_{DBE}) or does not close said switch when it is open and only closes said switch again after a predetermined time interval, in order to delay the start of the third operating phase and to obtain a voltage pulse extended by the time interval.

10. Circuit arrangement according to one of Claims 7 to 9,
**characterised in that**
the control circuit is configured so that it controls the closure of the first switch (HS) before the first operating phase starts again at a time which is still before a zero crossing of a feedback current when energy is fed back in the preceding fourth operating phase.

11. Method for the operation of a capacitive load, comprising the circuit arrangement according to one of Claims 1 to 6, in which the switches of the circuit arrangement are controlled for opening and closing, such that
- in a first operating phase the inductor (L) is charged via the voltage source,
- in a second operating phase following the first operating phase, energy stored in the inductor (L) is transmitted to the capacitive load (C_{DBE}),
- in a third operating phase following the second operating phase, energy is fed back into the inductor (L) and
- in a fourth operating phase following the third operating phase, energy is fed back from the inductor (L) via the anti-parallel diode of the first switch (HS) into the voltage source.

12. Method according to Claim 11,
**characterised in that**
the second switch (LS) is closed in the second operating phase at a time before a maximum voltage on the capacitive load (C_{DBE}) is reached.

13. Method according to Claim 11 or 12,
**characterised in that**
the second switch (LS) at the time, or immediately after the time, energy is fully transmitted from the inductor (L) to the capacitive load (C_{DBE}) is opened or is kept open when the switch is already open and only closed again after a predeterminable time interval, in order to delay the start of the third operating phase thereby and to obtain a voltage pulse extended by the time interval.

14. Method according to one of Claims 11 to 13,
**characterised in that**
the first switch (HS) is closed before the first operating phase is started again at a time which is still before a zero crossing of a feedback current when energy is fed back in the preceding fourth operating phase.

15. Method according to one of Claims 11 to 14,
**characterised in that**,
by controlling a further device, the supply voltage of the circuit arrangement according to one of Claims 1 to 10 is adjusted such that the inductor current flows continuously and, therefore, the first switch (HS) may be switched-on under the ZVS (Zero Voltage Switching) condition.

## Revendications

1. Agencement de commutation pour le fonctionnement d'une charge capacitive, en particulier d'une lampe à décharge à barrière diélectrique, comprenant :
un circuit primaire (P) et un circuit secondaire (S),
le circuit primaire (P) étant formé au moins par une connexion pour un pôle positif et un pôle négatif d'une source de tension, une inductance (L) et un premier interrupteur (HS) avec une diode antiparallèle entre l'inductance (L) et la connexion pour le pôle positif ou négatif de la source de tension, et
le circuit secondaire (S) étant formé au moins par l'inductance (L), une connexion pour la charge capacitive (C_{DBE}) et un deuxième interrupteur (LS) avec une diode antiparallèle entre la connexion pour la charge capacitive **(C_{DBE})** et le côté de l'inductance (L) relié au premier interrupteur (HS).

2. Agencement de commutation pour le fonctionnement d'une charge capacitive, en particulier d'une lampe à décharge à barrière diélectrique, comprenant :
un circuit primaire (P) et un circuit secondaire (S),
le circuit primaire (P) étant formé au moins par une connexion pour un pôle positif et un pôle négatif d'une source de tension, une inductance (L) et un premier interrupteur (HS) avec une diode antiparallèle entre l'inductance (L) et la connexion pour le pôle positif ou négatif de la source de tension, et
le circuit secondaire (S) étant formé au moins par l'inductance (L), un transformateur (Tr) pour la connexion de la charge capacitive (C_{DBE}), un deuxième interrupteur (LS) avec une diode antiparallèle entre le transformateur (Tr) et le côté de l'inductance (L) en liaison avec le premier interrupteur (HS) et un condensateur (C_{DC}) entre le transformateur (Tr) et le deuxième interrupteur (LS).

3. Agencement de commutation selon la revendication 2, **caractérisé en ce que**
dans le circuit secondaire (S) parallèlement au montage en série formé par le transformateur (Tr) et le condensateur (C_{DC}) une diode(D1) est disposée, laquelle limite une tension au deuxième interrupteur (LS) à la hauteur de la tension d'alimentation.

4. Agencement de commutation selon la revendication 2 ou 3, **caractérisé en ce que**
parallèlement à un montage en série formé par le premier interrupteur (HS), le deuxième interrupteur (LS) et le condensateur (C_{DC}) une diode (D2) est disposée, laquelle limite une tension à la charge capacitive (C_{DBE}) pendant une pause d'impulsion.

5. Agencement de commutation selon la revendication 1, **caractérisé en ce que**
dans le circuit secondaire (S) parallèlement à la connexion pour la charge capacitive (C_{DBE}) une diode est connectée, laquelle empêche des tensions positives à la charge capacitive (C_{DBE}).

6. Agencement de commutation selon l'une des revendications 1 à 5, **caractérisé en ce que**
dans le circuit primaire (P) sur un côté de l'inductance (L) situé en vis-à-vis du premier interrupteur (HS), un troisième interrupteur (HS2) avec une diode antiparallèle, parallèlement à un montage en série formé par une inductance (L) et le premier interrupteur (HS) une première diode, et parallèlement au montage en série formé par l'inductance (L) et le troisième interrupteur (HS2), une deuxième diode, sont disposés.

7. Agencement de commutation selon l'une des revendications 1 à 6 avec un circuit d'attaque, lequel est réalisé de manière à ce qu'il attaque les interrupteurs selon une suite chronologique de manière à ce que
au cours d'une première phase de fonctionnement, l'inductance (L) est chargée via la source de tension,
au cours d'une deuxième phase de fonctionnement suivant la première phase de fonctionnement, de l'énergie accumulée dans l'inductance (L) est transférée à la charge capacitive (C_{DBE}),
au cours d'une troisième phase de fonctionnement suivant la deuxième phase de fonctionnement, il y a un reflux d'énergie dans l'inductance (L) et
au cours d'une quatrième phase de fonctionnement suivant la troisième phase de fonctionnement, il y a une récupération d'énergie provenant de l'inductance (L) via la diode antiparallèle du premier interrupteur (HS) dans la source de tension.

8. Agencement de commutation selon la revendication 7, **caractérisé en ce que**
le circuit d'attaque est réalisé de manière à fermer le deuxième interrupteur (LS) lors la deuxième phase de fonctionnement à un moment qui se situe avant l'atteinte d'un maximum de tension à la charge capacitive (C_{DBE}).

9. Agencement de commutation selon la revendication 7 ou 8, **caractérisé en ce que**
le circuit d'attaque est réalisé de manière à ouvrir le deuxième interrupteur (LS) au moment, ou immédiatement après le moment du transfert complet d'énergie de l'inductance (L) à la charge capacitive (C_{DBE}) ou bien de manière à ne pas le fermer si l'interrupteur est ouvert et de manière à de nouveau le refermer seulement après un intervalle de temps pouvant être prédéterminé, afin de retarder de la sorte le début de la troisième phase de fonctionnement et obtenir une impulsion de tension prolongée de l'ordre de l'intervalle de temps.

10. Agencement de commutation selon l'une des revendications 7 à 9, **caractérisé en ce que**
le circuit d'attaque est réalisé de manière à attaquer le premier interrupteur (HS) pour une fermeture avant un nouveau début de la première phase de fonctionnement à un moment, lequel se situe encore avant un passage par zéro d'un courant de retour lors de la récupération d'énergie dans la quatrième phase de fonctionnement précédente.

11. Procédé pour le fonctionnement d'une charge capacitive avec l' agencement de commutation selon l' une des revendications 1 à 6, avec lequel les interrupteurs de l'agencement de commutation sont commandés pour l'ouverture et la fermeture de manière à ce que au cours d'une première phase de fonctionnement, l'inductance (L) est chargée via la source de tension,
au cours d'une deuxième phase de fonctionnement suivant la première phase de fonctionnement, de l'énergie accumulée dans l'inductance (L) est transférée à la charge capacitive (C_{DBE}),
au cours d'une troisième phase de fonctionnement suivant la deuxième phase de fonctionnement, il y a un reflux d'énergie dans l'inductance (L) et
au cours d'une quatrième phase de fonctionnement suivant la troisième phase de fonctionnement, il y a une récupération d'énergie provenant de l'inductance (L) via la diode antiparallèle du premier interrupteur (HS) dans la source de tension.

12. Procédé selon la revendication 11, **caractérisé en ce que**
le deuxième interrupteur (LS) est fermé au cours de la deuxième phase de fonctionnement à un moment, lequel se situe avant l'atteinte d'un maximum de tension à la charge capacitive (C_{DBE}).

13. Procédé selon la revendication 11 ou 12, **caractérisé en ce que**
le deuxième interrupteur (LS) est ouvert au moment, ou immédiatement après le moment du transfert complet d'énergie de l'inductance (L) à la charge capacitive (C_{DBE}), ou bien est gardé ouvert en cas d'interrupteur déjà ouvert et est de nouveau refermé seulement après un intervalle de temps pouvant être prédéterminé, afin de retarder de la sorte le début de la troisième phase de fonctionnement et obtenir une impulsion de tension prolongée de l'ordre de l'intervalle de temps.

14. Procédé selon l'une des revendications 11 à 13, **caractérisé en ce que**
le premier interrupteur (HS) est fermé avant un nouveau début de la première phase de fonctionnement à un moment, lequel se situe encore avant un passage par zéro d'un courant de retour lors de la récupération d'énergie dans la quatrième phase de fonctionnement précédente.

15. Procédé selon l'une des revendications 11 à 14, **caractérisé en ce que**
pour commander un autre dispositif, la tension d'alimentation de l'agencement de commutation selon l'une des revendications 1 à 10 est réglée de manière à ce que le courant de self circule de manière continue et que le premier interrupteur (HS) puisse par conséquent être allumé avec une condition ZVS.
